# EUROPÄISCHE PATENTANMELDUNG

(11) **EP 3 088 205 A1**
(43) Veröffentlichungstag der Anmeldung: **02.11.2016**
(21) Anmeldenummer: 15165503.2
(22) Anmeldetag: 28.04.2015
(51) Int. Cl.: B44C 5/04, B27N 3/00, B29C 43/00, E04F 15/00

(54) **VERFAHREN ZUR HERSTELLUNG EINES DEKORIERTEN WAND- ODER BODENPANEELS**

(71) Anmelder: Akzenta Paneele + Profile GmbH, 56759 Kaisersesch (DE)
(72) Erfinder: Hannig, Hans-Jürgen, 51427 Bergisch Gladbach (DE)
(74) Vertreter: Michalski Hüttermann & Partner Patentanwälte mbB

(57) **Zusammenfassung**

Die vorliegende Erfindung schlägt ein Verfahren zur Herstellung eines dekorierten Wand- oder Bodenpaneels vor, aufweisend die Verfahrensschritte:
a1) Bereitstellen eines schüttfähigen Trägermaterials (20), insbesondere eines Granulats,
a2) Bereitstellen eines schüttfähigen Feuchtigkeitschutzes (21), insbesondere eines Granulats,
b) Anordnen des Trägermaterials (20) und des Feuchtigkeitsschutzes (21) zwischen zwei bandartigen Fördermitteln (12, 14) unter Ausbildung eines Mehrschichtaufbaus (37) derart, dass eine Schicht (70, 72) des Feuchtigkeitsschutzes (21) wenigstens eine von der unteren oder der oberen Oberfläche des Mehrschichtaufbaus (37) ausbildet,
c) Formen des Mehrschichtaufbaus (20) unter Einwirkung von Temperatur unter Ausbildung eines bahnförmigen Trägers (36),
d) Komprimieren des Trägers (36),
e) Behandeln des Trägers (36) unter Einwirkung von Druck unter Verwendung einer Zweibandpresse,
f) gegebenenfalls Abkühlen des Trägers (36),
g) gegebenenfalls Aufbringen eines Dekoruntergrunds auf zumindest einen Teilbereich des Trägers (36);
h) Aufbringen eines eine Dekorvorlage nachbildenden Dekors auf zumindest einen Teilbereich des Trägers (36),
i) Aufbringen einer Schutzschicht auf zumindest einen Teilbereich des Dekors.

Durch ein derartiges Verfahren kann ein besonders effektives Herstellen eines Wand- oder Bodenpaneels erlaubt werden, wobei es das Verfahren ferner erlaubt, dass das hergestellte Paneel besonders stabil, adaptierbar und hochwertig sein kann. Gegenstand der vorliegenden Erfindung ist ferner ein Wand- oder Bodenpaneel, welches gemäß einem vorbeschriebenen Verfahren hergestellt ist, wobei ein plattenförmiger Träger (36) zumindest in einem Randbereich eine Profilierung, insbesondere als Verbindungselement, aufweisen kann. Dabei kann der der plattenförmige Träger (36) ein Material aufweisen, das auf einem WPC-Werkstoff oder einem PVC-Werkstoff basiert.

## Beschreibung

Die vorliegende Erfindung betrifft ein Verfahren zum Herstellen eines dekorierten Wand- oder Bodenpaneels sowie ein gemäß einem solchen Verfahren hergestelltes Wand- oder Bodenpaneel.

Dekorierte Platten sind an sich bekannt, wobei unter dem Begriff Wandpaneel auch Paneele zu verstehen sind, die zur Deckenbekleidung geeignet sind. Sie bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Die Herstellung der Paneele wie beispielsweise des Kerns beziehungsweise des Trägers kann dabei unter Umständen noch Verbesserungspotential bieten.

Es ist daher die Aufgabe der vorliegenden Erfindung, ein verbessertes Verfahren zur Herstellung von dekorierten Wand- oder Bodenpaneelen bereitzustellen.

Gelöst wird diese Aufgabe durch ein Verfahren gemäß Anspruch 1 und durch ein Paneel gemäß Anspruch 15 gelöst.

Mit der Erfindung wird somit ein Verfahren zur Herstellung eines dekorierten Wand- oder Bodenpaneels vorgeschlagen, aufweisend die Verfahrensschritte:
a1) Bereitstellen eines schüttfähigen Trägermaterials, insbesondere eines Granulats,
a2) Bereitstellen eines schüttfähigen Feuchtigkeitsschutzes, insbesondere eines Granulats;
b) Anordnen des Trägermaterials (20) und des Feuchtigkeitsschutzes zwischen zwei bandartigen Fördermitteln (12, 14) unter Ausbildung eines Mehrschichtaufbaus derart, dass eine Schicht des Feuchtigkeitsschutzes wenigstens eine von der unteren oder der oberen Oberfläche des Mehrschichtaufbaus ausbildet,
c) Formen des Mehrschichtaufbaus unter Einwirkung von Temperatur unter Ausbildung eines bahnförmigen Trägers,
d) Komprimieren des Trägers,
e) Behandeln des Trägers unter Einwirkung von Druck unter Verwendung einer Zweibandpresse,
f) gegebenenfalls Abkühlen des Trägers,
g) gegebenenfalls Aufbringen eines Dekoruntergrunds auf zumindest einen Teilbereich des Trägers;
h) Aufbringen eines eine Dekorvorlage nachbildenden Dekors auf zumindest einen Teilbereich des Trägers,
i) Aufbringen einer Schutzschicht auf zumindest einen Teilbereich des Dekors.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "schüttfähigen" Material kann insbesondere ein Material verstanden werden, welches durch einen Schüttvorgang beziehungsweise Streuvorgang auf eine Unterlage aufgebracht werden kann. Dabei kann das Material als Fluid vorliegen oder insbesondere als schüttfähiger Feststoff.

Ferner kann unter einem "Granulat" beziehungsweise einem "granularen Material" ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

"Holzwerkstoffe" im Sinne der Erfindung sind dabei neben Vollholzwerkstoffen auch Materialien wie beispielsweise Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie beispielsweise Spanpressplatten, Strangpressplatten, Grobspanplatten (Oriented Structural Board, OSB) und Spanstreifenholz sowie auch Holzfaserwerkstoffe wie beispielsweise Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, beispielsweise mit Zement, gebundene Holzspanplatten bilden Holzwerkstoffe im Sinne der Erfindung. Auch Kork stellt dabei einen Holzwerkstoff im Sinne der Erfindung dar.

Im Sinne der Erfindung sind unter dem Begriff "Faserwerkstoffe" Materialien wie beispielsweise Papier und Vliese auf Basis pflanzlicher, tierischer, mineralischer oder auch künstlicher Fasern zu verstehen, ebenso wie Pappen. Beispiele sind Faserwerkstoffe aus pflanzlichen Fasern und neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind etwa keratinbasierte Materialien wie beispielsweise Wolle oder Rosshaar. Beispiele für mineralische Faserwerkstoffe sind aus Mineralwolle oder Glaswolle.

Es konnte überraschender Weise gezeigt werden, dass es durch das vorbeschriebene Verfahren ermöglicht werden kann, eine besonders vorteilhafte Herstellung insbesondere eines Trägers eines Wand- oder Bodenpaneels zu kombinieren mit Materialien, welche zur Herstellung des Trägers des Paneels aufgrund ihrer herausragenden Eigenschaften besonders bevorzugt sind. Dabei kann durch eine Kombination der vorbeschriebenen Verfahrensschritte ein Herstellungsverfahren insbesondere eines Trägers mit herausragenden Materialien eines dekorierten Wand- oder Bodenpaneels mit einer verbesserten Effektivität ermöglicht werden, welches Verfahren darüber hinaus das Erzeugen höchst adaptierbarer und sehr stabiler Paneele erlaubt. Somit lassen sich auf einfache Weise Paneele erzeugen, welche bevorzugte Eigenschaften aufweisen können.

Dabei wurde insbesondere gefunden, dass durch das hier beschriebene Verfahren ein Paneel mit einer besonders langzeitstabilen verbesserten Beständigkeit gegen Feuchtigkeit erzeugt werden kann, welches weiterhin eine besonders gute Anpassbarkeit an die gewünschte Anwendung aufweisen kann.

Das Verfahren zur Herstellung eines Wand- oder Bodenpaneels umfasst die folgenden Verfahrensschritte.

Zunächst wird gemäß dem vorliegenden Verfahren ein Träger beziehungsweise ein Kern erzeugt. Das vorbeschriebene Verfahren umfasst hierfür gemäß Verfahrensschritt a1) zunächst das Bereitstellen eines schüttfähigen Trägermaterials. Das Trägermaterial dient als Basis zur Herstellung von insbesondere plattenförmigen Trägern für Paneele. Es kann beispielsweise als einheitliches Material vorliegen oder auch als Materialmischung aus zwei oder mehreren Materialien. Dabei sollte das Trägermaterial oder zumindest ein Bestandteil des Trägermaterials einen Schmelzpunkt oder einen Erweichungspunkt aufweisen, um das Trägermaterial in einem weiteren Verfahrensschritt durch Hitzeeinwirkung zu Formen, wie dies nachstehend im Detail erläutert ist. In besonders vorteilhafter Weise kann das Trägermaterial als schüttfähiger Feststoff beziehungsweise als Granulat bereitgestellt werden, wobei das Granulat in Abhängigkeit des verwendeten Materials rein beispielhaft etwa eine Korngröße in einem Bereich von ≥ 100µm bis ≤ 10mm aufweisen kann. Dies ermöglicht eine problemlose Lagerfähigkeit und ferner eine besonders gute Adaptierbarkeit an eine gewünschte Materialzusammensetzung. Denn insbesondere in granularer Form kann eine besonders homogene Mischung verschiedener Bestandteile erzeugt werden, wobei eine besonders definierte Mischung mit einer genau einstellbaren Zusammensetzung erhältlich ist. Beispielhaft können sogenannte Dryblends verwendet werden, also trockene Kunststoffpulver mit Zuschlagstoffen. Darüber hinaus lässt sich ein Granulat insbesondere in dem vorbeschriebenen Größenbereich sehr homogen und ferner sehr definiert auf einem Untergrund verteilen, so dass sich ein Träger mit einem höchst definierten Eigenschaftsprofil erzeugen lässt. Eine bevorzugte Schüttung beziehungsweise Verteilung des Trägermaterials kann dabei eine Abweichung der Schüttdichte von ≤5%, insbesondere ≤ 3% aufweisen.

Gemäß Verfahrensschritt a2) umfasst das Verfahren das Bereitstellen eines schüttfähigen Feuchtigkeitschutzes, insbesondere eines Granulats. Unter einem Feuchtigkeitsschutz ist dabei insbesondere ein derartiges Material zu verstehen, welches das Trägermaterial vor Feuchtigkeit, wie etwa Umgebungsfeuchtigkeit, schützen kann, also den Einfluss von Feuchtigkeit reduzieren kann, welche von außerhalb des Trägers auf den Träger wirkt. Hierzu kann der Feuchtigkeitsschutz beispielsweise weniger Feuchtigkeit aufnehmen, als das Trägermaterial und/oder kann der Feuchtigkeitsschutz einen Durchtritt von Feuchtigkeit, also insbesondere von Wasser oder von Wasserdampf, verhindern oder zumindest signifikant reduzieren. Der Feuchtigkeitsschutz kann wiederum als Granulat vorliegen. Das Granulat kann wiederum in Abhängigkeit des verwendeten Materials rein beispielhaft etwa eine Korngröße in einem Bereich von ≥ 100µm bis ≤ 10mm aufweisen. Ferner kann der Feuchtigkeitsschutz aus einem Material bestehen oder kann der Feuchtigkeitsschutz eine Mehrzahl an Materialien aufweisen.

Gemäß Verfahrensschritt b) wird das schüttfähige, insbesondere granulare, Trägermaterial und der schüttfähige, insbesondere granulare, Feuchtigkeitsschutz zwischen zwei bandartigen Fördermitteln angeordnet. Im Detail wird ein unteres bandartiges Fördermittel umlaufend verfahren und in einem definierten Abstand zu dem unteren Fördermittel wird ein oberes bandartiges Fördermittel umlaufend verfahren. Das Trägermaterial beziehungsweise der Feuchtigkeitsschutz kann so auf das untere Fördermittel aufgebracht werden und anschließend durch das untere und das obere Fördermittel begrenzt werden.

Dabei erfolgt ein Anordnen des Trägermaterials und des Feuchtigkeitsschutzes zwischen zwei bandartigen Fördermitteln unter Ausbildung eines Mehrschichtaufbaus derart, dass eine Schicht des Feuchtigkeitsschutzes wenigstens eine von der unteren oder der oberen Oberfläche des Mehrschichtaufbaus ausbildet. In anderen Worten wird ein Mehrschichtaufbau erzeugt, der wenigstens zwei Schichten aufweist, wobei eine der wenigstens zwei Schichten durch das Trägermaterial gebildet wird und wobei eine weitere der wenigstens zwei Schichten durch den Feuchtigkeitsschutz gebildet wird. Dabei ist es vorgesehen, dass wenigstens eine von der unteren oder der oberen Oberfläche des Mehrschichtaufbaus von dem Feuchtigkeitsschutz ausgebildet wird. In anderen Worten wird die unterste Schicht des Trägermaterials des Mehrschichtaufbaus nach unten und/oder die oberste Schicht des Trägermaterials des Mehrschichtaufbaus nach oben durch den Feuchtigkeitsschutz abgedeckt.

Ein besonders einfacher Aufbau kann somit durch einen Zweischichtaufbau gebildet werden, wobei der Feuchtigkeitsschutz die obere oder die untere Schicht ausbilden kann. Beispielsweise kann der Träger aus einem derartigen Zweischichtaufbau bestehen. In dieser Ausgestaltung kann eine Herstellung besonders einfach möglich sein. Dabei kann die Schicht des Feuchtigkeitsschutzes derart angepasst werden, dass sie etwa einen Anteil an der Gesamtdicke des fertiggestellten Trägers von beispielsweise < 50%, beispielsweise ≤ 30%, insbesondere ≤ 10%, beispielsweise ≤ 5% aufweisen kann, wobei eine Untergrenze etwa gegeben sein kann durch einschließlich 3% der Gesamtdicke. In dieser Ausgestaltung kann es grundsätzlich wählbar sein, ob die Schicht des Feuchtigkeitsschutzes die Unterseite oder die Oberseite des Mehrschichtaufbaus ausbildet. Die Unterseite ist dabei insbesondere die Seite, welche zu einem Trageuntergrund für das Paneel, also etwa zu einem Fußboden, zeigt.

Alternativ kann der Mehrschichtaufbau einen Dreischichtaufbau aufweisen oder aus diesem bestehen. In dieser Ausgestaltung kann es insbesondere vorgesehen sein, dass eine Schicht aus Trägermaterial vorgesehen ist, wobei oberhalb und unterhalb der Schicht aus Trägermaterial jeweils eine Schicht von Feuchtigkeitsschutz vorgesehen ist. In dieser Ausgestaltung kann ein besonders guter Schutz von der Oberseite und von der Unterseite möglich sein. Dabei können die Schichten des Feuchtigkeitsschutzes derart angepasst werden, dass sie gemeinsam etwa einen Anteil an der Gesamtdicke des fertiggestellten Trägers von beispielsweise < 70%, beispielsweise ≤ 50%, insbesondere ≤ 15%, beispielsweise ≤ 10% aufweisen könenn, wobei eine Untergrenze etwa gegeben sein kann durch einschließlich 6% der Gesamtdicke. Jede der zwei Schichten aus Feuchtigkeitsschutz kann dabei die Hälfte der vorgenannten Dicken ausmachen.

Grundsätzlich ist jedoch jegliche Schichtabfolge vom Rahmen der vorliegenden Erfindung umfasst, insoweit wenigstens die untere oder die obere Oberfläche des Mehrschichtaufbaus von dem Feuchtigkeitsschutz ausgebildet wird. Unabhängig von der Schichtabfolge und der Schichtanzahl des Mehrschichtaufbaus kann es vorgesehen sein, dass sämtliche Schichten des Feuchtigkeitsschutzes derart angepasst werden, dass sie gemeinsam etwa einen Anteil an der Gesamtdicke des fertiggestellten Trägers von beispielsweise < 70%, beispielsweise ≤ 50%, insbesondere ≤ 15%, beispielsweise ≤ 10% aufweisen können, wobei eine Untergrenze etwa gegeben sein kann durch einschließlich 6% der Gesamtdicke

Durch eine exakte Streuung kann dabei auf eine seitliche Begrenzung verzichtet werden. Durch die beiden Fördermittel kann das Trägermaterial beziehungsweise der Feuchtigkeitsschutz somit zu beziehungsweise durch einzelne Bearbeitungsstationen gefördert und zu einem Träger verarbeitet werden. Weiterhin kann der Träger bereits in diesem Verfahrensschritt vorgeformt werden. Somit können die bandartigen Fördermittel zwei Funktionen übernehmen, nämlich die eines Transportmittels und die einer Form.

Dabei können die bandartigen Fördermittel zumindest im Bereich der Zweibandpresse, wie dies nachfolgend beschrieben ist zumindest teilweise aus Teflon beziehungsweise aus Polytetrafluorethylen (PTFE) ausgestaltet sein. Beispielsweise können die Bänder vollständig aus Polytetrafluorethylen geformt sein, oder es können Bänder verwendet werden, welche mit einer Außenbeschichtung aus Polytetrafluorethylen versehen sind. In letzterem Fall können etwa glasfaserverstärkte Kunststoffbänder oder Stahlbänder mit einer Beschichtung aus Polytetrafluorethylen Verwendung finden. Durch derartige Fördermittel kann aufgrund der Antihafteigenschaften dieses Werkstoffs eine besonders definierte beispielsweise glatte Oberfläche des erzeugten Trägers erzeugbar sein. So kann verhindert werden, dass das geförderte Trägermaterial an den Fördermitteln anhaftet und so die Oberflächenstruktur unmittelbar oder durch anhaftendes Material in einem nächsten Zyklus negativ beeinflusst. Darüber hinaus ist Polyterafluorethylen auch bei hohen Temperaturen beständig gegen Chemikalien wie auch gegen eine Zersetzung, so dass zum Einen eine problemlose Temperaturbehandlung des Trägermaterials möglich ist und die Fördermittel ferner auch für einen langen Zeitraum stabil sind. Darüber hinaus kann das Trägermaterial frei wählbar sein.

Ferner können die bandartigen Fördermittel zumindest teilweise strukturiert sein. Durch die Verwendung von strukturierten Fördermitteln kann ein Träger erzeugbar sein, der ebenfalls strukturiert ist und somit etwa Poren aufweisen kann, die etwa ein nachzuempfindendes Naturprodukt wiederspiegeln können.

Die Fördermittel können dabei die gesamte Vorrichtung 10 durchlaufen, oder können unterbrochen sein und als mehrere Fördermittel ausgestaltet sein.

Das Austragen des Trägermaterials gemäß Verfahrensschritt b) kann dabei insbesondere mittels eines oder einer Mehrzahl an Streuköpfen realisierbar sein, welche das Trägermaterial und/oder den Feuchtigkeitsschutz definiert austragen können. Bezüglich der Streuköpfe können diese beispielsweise Bestandteil eines Streuaggregats sein und wenigstens eine rotierende Streuwalze aufweisen. Beispielsweise kann ein Trichter vorgesehen sein, der das auszutragende Material definiert auf die Streuwalze austragen kann. Dabei kann ferner ein Rakel vorgesehen sein, welches das Material in Vertiefungen der Walze streicht. Anschließend kann das Material mit Hilfe einer rotierenden Bürstwalze aus der Streuwalze ausgetragen werden, wobei es gegen eine Prallfläche trifft und von dort auf das Fördermittel gleitet. Um die Streubreite zu regulieren kann ferner eine Streubreiteneinstellung vorgesehen sein. In dieser Ausgestaltung kann ein besonders homogenes Austragen des Trägermaterials erfolgen, was gleichermaßen zu einem homogenen Träger mit definierter Qualität führen kann.

Beispielsweise kann ein Streukopf oder können zwei, drei oder mehr Streuköpfe vorgesehen sein. Dadurch kann der Träger auf besonders einfache Weise besonders maßschneiderbar sein, indem beispielsweise eine gewünschte Materialmischung bereitgestellt werden kann. In dieser Ausgestaltung kann die Mischung problemlos während des Herstellungsprozesses oder zwischen zwei Chargen angepasst werden, so dass eine besonders große Variabilität sichergestellt werden kann. Darüber hinaus kann durch eine unterschiedliche Bestückung der einzelnen Streuköpfe eine Mischung für das Trägermaterial beziehungsweise den Feuchtigkeitsschutz erst unmittelbar vor der Verarbeitung erzeugt werden, so dass eine negative Beeinflussung der verschiedenen Komponenten untereinander und eine dadurch bedingte Verringerung der Qualität des hergestellten Trägers verhindert werden kann. Ferner können auch das Trägermaterial und der Feuchtigkeitsschutz durch einen oder durch eine Mehrzahl an Streuköpfen ausgetragen werden. Dabei sollten entsprechende Vorratsbehälter für das Trägermaterial beziehungsweise für den Feuchtigkeitsschutz mit dem oder den Streuköpfen entsprechend zum Austragen des Trägermaterials beziehungsweise des Feuchtigkeitsschutzes verbunden sein.

Beispielsweise kann ein Sensor zum Überprüfen des Anordnens des Trägermaterials zwischen den zwei bandartigen Fördermitteln vorgesehen sein, etwa mit Bezug auf das Flächengewicht des aufgetragenen Materials beziehungsweise die Homogenität.

In einem weiteren Schritt erfolgt gemäß Verfahrensschritt c) ein Formen des zwischen den bandartigen Fördermitteln angeordneten Mehrschichtaufbaus unter Einwirkung von Temperatur beziehungsweise Wärme. In diesem Verfahrensschritt erfolgt durch die einwirkende Wärme beziehungsweise Hitze somit ein Aufschmelzen beziehungsweise Erweichen des Trägermaterials oder zumindest eines Teils desselben, wodurch beispielsweise das Granulat formbar werden kann. In diesem Zustand kann es gemeinsam mit dem Feuchtigkeitsschutz den zwischen den Fördermitteln sich ausbildenden Aufnahmeraum homogen ausfüllen und so einen zusammenhängenden bahnförmigen Träger ausbilden, der weiter behandelt werden kann.

Der so ausgebildete bahnförmige Träger kann gleichzeitig zu oder nach Verfahrensschritt c) folgend gemäß Verfahrensschritt d) komprimiert werden. Dieser Verfahrensschritt kann insbesondere in einer geeigneten Presse beziehungsweise Walze erfolgen. Es erfolgt hier somit ein erstes Verdichten des bahnförmigen Trägers. Bei diesem Schritt kann der Träger bereits im Wesentlichen seine gewünschte Dicke erhalten, so dass bei folgenden Bearbeitungsschritten lediglich ein geringfügiges Verdichten erfolgen braucht und die weiteren Schritte somit besonders schonend verlaufen können, wie dies nachstehend im Detail erläutert wird. Dabei kann insbesondere sichergestellt werden, dass die Temperatur des Trägers soweit abgekühlt ist, dass eine geeignete Komprimierbarkeit unter Erhalt des gewünschten Ergebnisses ermöglicht werden kann.

In einem weiteren Verfahrens schritt e) erfolgt nun ein weiteres Behandeln des Trägers unter Einwirkung von Druck unter Verwendung einer Zweibandpresse. In diesem Verfahrensschritt können insbesondere die Oberflächeneigenschaften des Trägers eingestellt werden. Beispielsweise kann in diesem Verfahrensschritt insbesondere eine Glättung der Oberfläche erfolgen. Hierzu kann der zuvor verdichtete Träger unter Einwirkung von Druck behandelt werden, wobei insbesondere der Druck gering gewählt werden kann derart, dass diese zweite Komprimierung lediglich in einem sehr geringen Bereich stattfindet. Beispielhaft kann eine Komprimierung in einem Bereich von ≤ 10%, ≤5%, insbesondere ≤ 3% der Gesamtdicke des Trägers vor dem Komprimieren erfolgen. Beispielsweise kann eine Verdichtung in einem Bereich von 0,2-0,3mm bei einer Plattendicke von 4,5mm erfolgen. Somit kann die Ausgestaltung der Bearbeitungsvorrichtung in diesem Verfahrensschritt insbesondere gewählt werden in Abhängigkeit einer gewünschten Einstellung der Oberflächeneigenschaften, was besonders schonend sein kann. Somit kann die Zweibandpresse als Kalibrierungszone dienen, insbesondere zum Einstellen der endgültigen Oberflächeneigenschaften wie auch der Dicke des Trägers dienen.

Dabei kann insbesondere das Verwenden einer Zweibandpresse von Vorteil sein, da mit einer derartigen Presse besonders schonende Komprimierungsschritte möglich sind und ferner die Oberflächengüte besonders effektiv und definiert eingestellt werden kann. Weiterhin kann insbesondere das Verwenden einer Bandpresse hohe Liniengeschwindigkeiten ermöglichen, so dass der gesamte Prozess einen besonders hohen Durchlauf ermöglichen kann.

Beispielsweise kann eine derartige Bandpresse, welche meist einen recht langen Bearbeitungsraum in der Förderrichtung des Trägers aufweist, eine Mehrzahl von Temperierzonen aufweisen, was ein Temperaturprofil und damit eine effektive Einstellung der Oberflächeneigenschaften auch bei hohen Liniengeschwindigkeiten erlauben kann.

Darüber hinaus kann etwa durch das Vorsehen von Pneumatikzylindern eine besonders gleichmäßige und definiert einstellbare Bandspannung der Zweibandpresse ermöglicht werden, so dass die Einstellung der Oberflächengüte wie auch der Komprimierung besonders exakt sein kann. Die Bandpresse kann dabei etwa Stahlbänder, beispielsweise ohne Beschichtung oder etwa mit Polyterafluorethylen beschichtet, umfassen und etwa durch eine Thermalölheizung temperierbar sein.

Ein Glätten beiziehungsweise das Einstellen der Oberflächengüte kann dabei in diesem Schritt bedeuten, dass zwar die oberste Oberfläche geglättet wird, etwa bereits eingebrachte Strukturen beziehungsweise Poren jedoch nicht oder nur in einem definierten Bereich beeinflusst werden, so dass diese auch nach diesem Verfahrensschritt noch in gewünschter Weise vorliegen können, insoweit dies erwünscht ist. Dies kann insbesondere durch die Verwendung einer Bandpresse mit geeignetem Temperaturprofil und mit geeigneten Druckwerten ermöglicht werden.

Dabei kann es bevorzugt vorgesehen sein, dass der Träger während oder vor Verfahrensschritt e) gekühlt wird, insbesondere unter den Schmelzpunkt oder den Erweichungspunkt eines Kunststoffbestandteils des Trägermaterials. In anderen Worten kann der Träger vor oder in der Zweibandpresse gekühlt werden. Dabei kann ein Kühlen nur in einem begrenzten Bereich erfolgen, so dass der Träger zwar noch eine verglichen zu der Raumtemperatur (22°C) erhöhte Temperatur aufweist, jedoch unterhalb der zuvor eingestellten erhöhten Temperatur liegt und dabei bevorzugt und in Abhängigkeit des verwendeten Kunststoffs, unterhalb den Schmelzpunkt oder den Erweichungspunkt des in dem Trägermaterial enthaltenen Kunststoffs. Dies kann beispielsweise durch eine geeignete Wahl der Temperatur der Temperiereinrichtungen erfolgen, welche sich in der Zweibandpresse befinden, oder der Träger kann insbesondere durch bevor der Zweibandpresse angeordnete Temperiermittel gekühlt beziehungsweise weniger erhitzt werden. Insbesondere durch eine Kühlung des Trägers kann ein besonders qualitativ hochwertiges Oberflächenbild erzeugt werden, da die Bänder der Zweibandpresse, welche etwa aus Polytetrafluorethylen (Teflon) ausgestaltet sein können, geschont werden. Weiterhin kann ein Schüsseln beziehungsweise ein Auftreten von Lunkern oder Poren verhindert werden, so dass die Oberfläche des Trägers besonders hochwertig sein kann. Geeignete Temperaturen liegen beispielsweise und nicht beschränkend in einem Bereich von unterhalb von 130°C, etwa in einem Bereich von ≥ 80°C bis ≤ 115°C für Polyethylen.

Im weiteren Verlauf erfolgt in einem weiteren Verfahrensschritt f) anschließend gegebenenfalls ein weiteres Abkühlen des bahnförmigen Trägers. Der Träger kann insbesondere durch das Vorsehen einer Kühlvorrichtung mit definierten Kühlstufen auf eine Temperatur abgekühlt werden, welche der Raumtemperatur entspricht oder rein beispielhaft in einem Bereich von bis zu 20°C darüber liegt. Beispielsweise kann eine Mehrzahl an Kühlzonen vorliegen, um ein definiertes Abkühlen des Trägers zu ermöglichen.

Nach einem Abkühlen des erzeugten Trägers kann der Träger zunächst in bahnartiger Form oder als vereinzelte plattenartige Träger gelagert werden und das Verfahren kann zunächst beendet sein. Vorzugsweise schließen sich jedoch unmittelbar weitere Behandlungsschritte an, welche etwa ohne ein Anschleifen realisierbar sein können, insbesondere um den bereitgestellten Träger derart zu bearbeiten, um ein fertiges Paneel zu erzeugen, wie dies nachstehend im Detail erläutert ist.

Zur Herstellung eines fertigen Paneels umfasst das Verfahren die weiteren folgenden Verfahrensschritte, um den Träger mit einem Dekor zu versehen und dieses mit einer Schutzschicht zu beschichten. Dabei werden die nachfolgenden Schritte bevorzugt unmittelbar mit dem erzeugten bahnförmigen Träger durchgeführt. Es ist von der Erfindung jedoch ebenfalls mit umfasst, dass der bahnförmige Träger vor einem geeigneten der Verfahrensschritte g) bis i) zunächst in eine Vielzahl plattenförmiger Träger unterteilt wird und/oder der plattenförmigen Träger durch die entsprechend folgenden Verfahrensschritte weiter behandelt wird. Die nachstehenden Erläuterungen gelten für beide Alternativen entsprechend, wobei zur Vereinfachung im Weiteren von einer Behandlung des Trägers gesprochen wird.

Es kann ferner gegebenenfalls zunächst etwa vor dem Verfahrensschritt g) oder h) ein Vorbehandeln des Trägers zur elektrostatischen Entladung erfolgen. Dies kann insbesondere dazu dienen, das Auftreten von Unschärfen im Laufe der Dekoraufbringung zu vermeiden.

Gemäß Verfahrensschritt g) kann weiterhin gegebenenfalls ein Dekoruntergrund auf zumindest einen Teilbereich des Trägers aufgebracht werden. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ein derartiger Druckuntergrund ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet. Zur Aufbringung der Harzschicht kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥5 g/m² und ≤40 g/m², vorzugsweise ≥10 g/m² und ≤30 g/m² aufgetragen werden. Ferner kann ein Papier oder Vlies mit einer Grammatur zwischen ≥30 g/m² und ≤80 g/m², vorzugsweise zwischen ≥40 g/m² und ≤70 g/m² auf den plattenförmigen Träger aufgebracht.

Weiterhin kann gemäß Verfahrensschritt h) ein Aufbringen eines eine Dekorvorlage nachbildenden Dekors auf zumindest einen Teilbereich des Trägers erfolgen. Dabei kann das Dekor durch den sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet-Verfahren oder Laserdruck-Verfahren eingesetzt werden.

Ferner können die Dekorschichten aus einer insbesondere strahlungshärtbaren Farbe und/oder Tinte ausgebildet werden. Beispielsweise kann eine UV-härtbare Farbe oder Tinte verwendet werden.

Ferner können die Dekorschichten jeweils in einer Dicke in einem Bereich von ≥ 5µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Gemäß Verfahrensschritt i) kann ein Aufbringen einer Schutzschicht auf zumindest einen Teilbereich des Dekors vorgesehen sein. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Desweiteren kann es vorgesehen sein, dass in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalz oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Darüber hinaus kann auf der der Dekorseite gegenüberliegenden Seite ein Gegenzug aufgebracht werden. Dabei ist es insbesondere bevorzugt, dass der Gegenzug in einem gemeinsamen Kalandrierschritt mit den Papier oder Vlies auf der Dekorseite aufgebracht wird.

Alternativ oder zusätzlich können die Randbereiche des Paneels strukturiert beziehungsweise profiliert werden, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen.

Das vorstehend beschriebene Verfahren ermöglicht dabei ein verbessertes Herstellen eines Wandpaneels beziehungsweise Bodenpaneels.

Insbesondere kann das Trägermaterial besonders frei wählbar sein und es können insbesondere Trägermaterialen Verwendung finden, welche für das herzustellende Paneel besonders vorteilhafte Eigenschaften aufweisen können. Beispielsweise können besonders hochwertige Paneele erzeugbar sein, welche bezüglich Erscheinung und Stabilität höchsten Anforderungen genügen können. Dabei kann eine Herstellung besonders effektiv und kostengünstig sein.

Das bei dem Verfahren zum Herstellen eines Wand- und Bodenpaneels anwendbare Verfahren zum Erzeugen eines Trägers kann dabei insbesondere im Rahmen des vorliegenden erfindungsgemäßen Verfahrens zu Herstellen von Wand- und Bodenpaneelen vorteilhaft sein, da es besonders hohe Liniengeschwindigkeiten ermöglicht, die weit über den aus dem Stand der Technik bekannten Liniengeschwindigkeiten, als einer Vorschubgeschwindigkeit des Trägers beziehungsweise der Fördermittel, für das Herstellen eines Paneels liegen können. Dabei können insbesondere durch die Verwendung einer Zweibandpresse Liniengeschwindigkeiten von bis zu 15 m/min, erzielbar sein, wobei Werte von 6m/min oder mehr auch für diesbezüglich problematische Materialien möglich sein können.

Weiterhin kann durch den vorbeschriebenen zweistufigen Komprimierungsvorgang eine sehr genaue Dicke insbesondere für Paneel-Trägermaterialien erzielbar sein, wobei beispielsweise Dickentoleranzen in einem Bereich von 0,1mm oder darunter erzielbar sein können. Somit kann ein durch das vorbeschriebene Verfahren hergestellter Träger neben einer besonders homogenen Zusammensetzung ferner eine besonders gleichmäßige Dicke aufweisen, was ein besonders definiertes und reproduzierbares Produkt und somit eine besonders hohe Qualität erlaubt.

Dadurch, dass das Trägermaterial und der Feuchtigkeitsschutz zwischen zwei bandartigen Fördermitteln unter Ausbildung eines Mehrschichtaufbaus derart angeordnet wird, dass eine Schicht des Feuchtigkeitsschutzes wenigstens eine von der unteren oder der oberen Oberfläche des Mehrschichtaufbaus ausbildet, kann ferner die Feuchtigkeitsbeständigkeit eines so hergestellten Paneels signifikant verbessert werden. Denn durch den Feuchtigkeitsschutz kann ein Feuchtigkeitseintrag in den Träger von unten und/oder von oben in den Träger signifikant reduziert werden. Dadurch kann sowohl eine größere Widerstandfähigkeit gegen Feuchtigkeit von unten ermöglicht werden, was insbesondere bei noch nicht ganz trockenen Untergründen, wie etwa Fußböden, von Vorteil ist. Gegebenenfalls kann so auf das Verwenden einer zusätzlichen Dampfsperre vor dem Verlegen des Paneels verzichtet werden. Darüber hinaus ist auch eine vergrößerte Feuchtigkeits-Stabilität von oben möglich, wodurch eine vergrößerte Robustheit im täglichen Gebrauch ermöglicht werden kann. Zusätzliche Schichten, welche auf die Oberseite des Paneels aufgebracht werden müssten, sind hierzu nicht notwendig. Darüber hinaus können die Anforderungen etwa an eine Deckschicht mit Bezug auf eine feuchtigkeitshemmende Wirkung reduziert werden, was den Aufbau vereinfachen kann.

Die feuchtigkeitshemmende Struktur kann dabei insbesondere dadurch, dass der Feuchtigkeitsschutz eine geringere Wasseraufnahme als Holz aufweist, ein Aufquellen und eine dadurch bedingte Dimensionsänderung des Paneels verhindern oder zumindest signifikant reduzieren. Denn durch das Vorsehen des Feuchtigkeitsschutzes kann ein Durchtritt von Feuchtigkeit beziehungsweise Wasser zu einem Holzbestandteil, beispielsweise, des Trägermaterials verhindert werden, so dass eine negative Beeinflussung des Trägermaterials verhindert werden kann. Durch die Auswahl des Materials des Feuchtigkeitsschutzes kann ein Kontakt des Paneels mit Feuchte von der Unterseite und/oder der Oberseite im Wesentlichen keine oder zumindest deutlich geringere negative Auswirkungen haben verglichen mit einem direkten Kontakt des Trägermaterials mit Feuchte.

Vorzugsweise kann der Feuchtigkeitsschutz sämtliches Trägermaterial nach oben und/oder nach unten schützen. Nicht grundsätzlich ausgeschlossen ist im Rahmen der Erfindung jedoch, dass auch eine insbesondere dünne Schicht an Trägermaterial außerhalb des Feuchtigkeitsschutzes vorgesehen ist.

Ferner kann kann die feuchtigkeitshemmende Struktur besonders einfach und langlebig in den Träger integriert werden. Denn ein nachträgliches Aufbringen, etwa Aufkleben, auf einen fertig gestellten Träger einer feuchtigkeitshemmenden Schicht ist nicht notwendig, da die feuchtigkeitshemmende Struktur bereits während des Herstellungsprozesses und ferner während des Formens des Trägers in den Träger eingearbeitet wird beziehungsweise ein Bestandteil desselben wird. Dadurch kann ein Arbeitsschritt eingespart werden, was das Verfahren vereinfachen und somit besonders kostengünstig gestalten kann. Darüber hinaus kann durch eine Integrierung der feuchtigkeitshemmenden Struktur bereits bei der Herstellung des Trägers eine besonders hohe Stabilität ermöglicht werden, was eine besonders langzeitstabile Struktur des Paneels ermöglichen kann.

Dabei ist es jedoch weiterhin möglich, durch das Vorsehen des Feuchtigkeitsschutzes neben beziehungsweise zusätzlich zu und getrennt angeordnet von dem Trägermaterial in einem Mehrschichtaufbau, die von dem Trägermaterial herrührenden Eigenschaften des Trägers zumindest im Wesentlichen beibehalten zu können, da dieses in dem Träger in unveränderter Form vorliegen kann. Denn bei einem hier beschriebenen Verfahren ist es nicht notwendig, den Feuchtigkeitsschutz homogen in dem Träger zu verteilen, da nur definierte Schichten des Trägers mit dem Feuchtigkeitsschutz ausgestaltet sind.

Darüber hinaus lässt sich das hier beschriebene Einbringen einer feuchtigkeitshemmenden Struktur problemlos in das Herstellungsverfahren integrieren, so dass keine aufwändigen Umbauarbeiten beziehungsweise Prozessadaptionen notwendig sind.

Weiterhin ermöglicht das hier beschriebene Verfahren auf einfache Weise eine besonders gute Anpassbarkeit an ein gewünschtes Anwendungsgebiet beziehungsweise an die gewünschten Eigenschaften des Paneels. Beispielsweise kann durch eine Anpassung des Mehrschichtaufbaus, wie etwa die Anzahl der Schichten, die Position der Schicht des Feuchtigkeitsschutzes usw. das Paneel in gewünschter Weise maßgeschneidert werden. Eine Anpassung kann dabei auf einfache Weise ermöglicht werden durch eine Änderung der Streu-Reihenfolge beziehungsweise der Streu-Dauer des jeweiligen Materials und somit durch eine einfache Einstellung der Steuerung der Streuköpfe, ohne jedoch Umbauarbeiten an einer Anlage durchführen zu müssen. Dadurch wird auch das Produzieren kleiner Mengen auf einfache Weise möglich.

Ferner konnte gefunden werden, dass insbesondere durch das vorbeschriebene Verfahren sehr stabile Träger erzeugbar sein können, welche bezüglich der Stabilität weiter verbessert sein kann.

In einer bevorzugten Ausgestaltung kann es vorgesehen sein, dass der Feuchtigkeitsschutz ein Material aus einem Bestandteil der Reispflanze, Zellulose oder ein mineralisches Material, wie etwa Steinmehl, Kreide oder andere anorganische mineralische Materialien, aufweist. Als besonders geeignet haben sich für einen Feuchtigkeitsschutz neben den anderen vorgenannten Materialien herausgestellt der Reis-Spelz, der Reis-Stengel und die Reis-Schale der Reisbestandteile. Weniger geeignet und daher vorteilhafter Weise nicht Bestandteil des Feuchtigkeitsschutzes kann dagegen das Reiskorn sein. Grundsätzlich kann insbesondere ein faserartiger Bestandteil von Vorteil sein. Insbesondere die vorgenannten Materialien weisen eine geringe Wasseraufnahme auf, so dass der Wassergehalt in dem Träger schon aufgrund einer geringen Anfangsfeuchte sehr niedrig ist. Darüber hinaus können die vorgenannten Materialien durch eine geringe Feuchtigkeitsaufnahme auch im Wesentlichen vollständig sicherstellen, dass, insbesondere bei einer Einbettung in ein weiteres Material, ein Feuchtedurchtritt durch entsprechende Schichten dieses Materials erfolgen kann. Somit können insbesondere die vorgenannten Materialien sicherstellen, dass ein effektiver Feuchtigkeitsschutz des Trägermaterials gewährleistet ist und somit ein Aufquellen, beispielsweise, verhindert werden kann. Dabei können die entsprechenden Materialien beispielsweise gemahlen vorliegen. Geeignete Korngrößen liegen beispielsweise in einem Bereich von ≥ 100µm bis ≤ 1200µm.

In einer weiteren bevorzugten Ausgestaltung kann der Feuchtigkeitsschutz einen Kunststoff als Matrixmaterial und einen Füllstoff aufweisen. Unter einem Matrixmaterial kann dabei insbesondere ein derartiges Material verstanden werden, welches als Matrix dient und etwa ein weiteres, wirksames Material als Füllstoff, wie beispielsweise die vorgenannten Reisbestandteile, Zellulose oder die vorgenannten mineralischen Substanzen, einbetten kann. Beispielsweise kann der Kunststoff Polyethylen oder Polypropylen aufweisen. Dies kann vorteilhaft sein gegenüber der Verwendung eines reinen Matrixmaterials, da ein Kunststoff, beispielsweise, zu fließfähig sein kann und dadurch keine oder ein nur begrenzt definierte Struktur erzeugbar ist. Darüber hinaus kann der Feuchtigkeitsschutz durch das Vorsehen einer derartigen Kombination unter Umständen noch effektiver sein, da der Füllstoff als wirksamer Bestandteil ebenfalls eine verglichen mit Holz, beispielsweise, geringe Neigung zum Quellen aufweist. Beispielsweise kann der Feuchtigkeitsschutz den gleichen Kunststoff aufweisen beziehungsweise kann die kunststoffhaltige Matrix den gleichen Kunststoff aufweisen oder aus diesem bestehen, wie ein Kunststoff, der Bestandteil des Trägermaterials ist. Unter dem gleichen Kunststoff ist dabei zu verstehen, dass die beiden Kunststoffe die gleiche Zusammensetzung aufweisen. Eine Ausgestaltung des Trägermaterials mit einem Kunststoff ist im Folgenden im Detail beschrieben. In dieser Ausgestaltung kann es in besonders vorteilhafter Weise ermöglicht werden, dass die weiteren Bestandteile des Feuchtigkeitsschutzes in dem Herstellungsverfahren in den Kunststoff eingebettet werden, da der Kunststoff in dem weiteren Verfahren aufgeschmolzen wird. Dadurch kann ein besonders effektiver Feuchtigkeitsschutz und ferner ein besonders stabiler Verbund mit dem Trägermaterial erzeugt werden, welcher die Langzeitstabilität des Trägers weiter erhöhen kann. Insbesondere, wenn das Trägermaterial und das Matrixmaterial den gleichen Kunststoff aufweisen, kann die Stabilität besonders vorteilhaft erhöht werden. Denn insbesondere in dieser Ausgestaltung kann eine besonders innige Verbindung von Trägermaterial und Folie während des Herstellungsprozesses erfolgen, so dass eine hohe Feuchtigkeitsbeständigkeit mit einer hohen Langlebigkeit vereint werden kann.

Gemäß einer weiteren Ausgestaltung kann ein Trägermaterial auf Basis eines Kunststoffs oder eines Holz-Kunststoff-Komposit-Werkstoffs (WPC) bereitgestellt werden. Beispielsweise kann die Trägerplatte aus einem thermoplastischen, elastomeren oder duroplastischen Kunststoff ausgebildet sein. Des Weiteren sind Recyclingwerkstoffe aus den genannten Materialien im Rahmen des erfindungsgemäßen Verfahrens einsetzbar. Bevorzugt als Plattenmaterial können dabei insbesondere thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate diese. Dabei können unabhängig von dem Grundmaterial des Trägers beispielsweise Weichmacher vorgesehen sein, die etwa in einem Bereich von >0 Gew.-% bis ≤ 20 Gew.-%, insbesondere ≤ 10 Gew.-%, vorzugsweise ≤ 7 Gew.-%, beispielsweise in einem Bereich von ≥ 5 Gew.-% bis ≤ 10 Gew.-% vorliegen können. Ein geeignete Weichmacher umfasst etwa den unter der Handelsbezeichnung "Dinsch" von der Firma BASF vertriebenen Weichmacher. Ferner können als Ersatz für herkömmliche Weichmacher Copolymere, wie etwa Acrylate oder Methacrylate, vorgesehen sein. Ferner kann in oder vor der Zweibandpresse in dieser Ausgestaltung der Träger auf eine Temperatur unterhalb der Schmelztemperatur des Kunststoff-Bestandteils gekühlt werden.

Insbesondere thermoplastische Kunststoffe bieten auch den Vorteil, dass die aus ihnen hergestellten Produkte sehr leicht rezykliert werden können. Es können auch Recycling-Materialien aus anderen Quellen verwendet werden. Hierdurch ergibt sich eine weitere Möglichkeit zur Senkung der Herstellungskosten.

Derartige Träger sind dabei sehr elastisch beziehungsweise federnd, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann.

Darüber hinaus bieten die vorgenannten Träger den Vorteil einer guten Wasserfestigkeit, da sie eine Quellung von 1% oder weniger aufweisen. Dies gilt in überraschender Weise neben reinen Kunststoffträgern auch für WPC-Werkstoffe, wie diese nachfolgend im Detail erläutert sind.

In besonders vorteilhafter Weise kann das Trägermaterial Holz-Polymer-Werkstoffe (Wood Plastic Composite, WPC) aufweisen oder daraus bestehen. Hier kann beispielhaft ein Holz und ein Polymer geeignet sein, welches in einem Verhältnis von 40/60 bis 70/30, beispielsweise 50/50 vorliegen kann. Als Polymere Bestandteile können etwa Polypropylen, Polyethylen oder ein Copolymer aus den beiden vorgenannten Materialien verwendet werden, wobei ferner Holzmehl als Holzbestandteil Verwendung finden kann. Derartige Materialien bieten den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann. Beispielsweise sind für ein WPC-Produkt mit einer 50/50 Verteilung der Holz- und Polymeranteile bei einer beispielhaften Produktstärke von 4,1mm möglich, was einen besonders effektiven Herstellungsprozess ermöglichen kann.

Ferner können so sehr stabile Paneele erzeugt werden, die weiterhin eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann. Ferner kann auch die vorgenannte gute Wasserverträglichkeit mit einer Quellung von unter 1% bei derartigen WPC-Materialien ermöglicht werden. Dabei können WPC-Werkstoffe beispielsweise Stabilisatoren und/oder andere Additive aufweisen, welche bevorzugt im Kunststoffanteil vorliegen können.

Weiterhin kann es besonders vorteilhaft sein, dass das Trägermaterial ein PVC-basiertes Material umfasst oder daraus besteht. Auch derartige Materialien können in besonders vorteilhafter Weise für hochwertige Paneele dienen, welche etwa auch in Feuchträumen problemlos verwendbar sind. Ferner bieten sich auch PVC-basierte Trägermaterialien für einen besonders effektiven Herstellungsprozess an, da hier etwa Liniengeschwindigkeiten von 8m/min bei einer beispielhaften Produktstärke von 4,1mm möglich sein können, was einen besonders effektiven Herstellungsprozess ermöglichen kann. Ferner weisen auch derartige Träger eine vorteilhafte Elastizität und Wasserverträglichkeit auf, was zu den vorgenannten Vorteilen führen kann.

Bei Kunststoff-basierten Paneelen wie auch bei WPC-basierten Paneelen können dabei mineralische Füllstoffe von Vorteil sein. Besonders geeignet sind hier etwa Talk oder auch Kalziumcarbonat (Kreide), Aluminiumoxid, Kieselgel, Quarzmehl, Holzmehl, Gips. Beispielsweise kann Kreide vorgesehen sein in einem Bereich von ≥ 30 Gew.-% bis ≤ 70 Gew.-%, wobei durch die Füllstoffe, insbesondere durch die Kreide insbesondere der Schlupf des Trägers verbessert werden kann. Auch können sie in bekannter Weise eingefärbt sein. Insbesondere kann es vorgesehen sein, dass das Plattenmaterial ein Flammschutzmittel aufweist.

Gemäß einer besonders bevorzugten Ausgestaltung der Erfindung besteht das Trägermaterial aus einer Mischung eines PE/PP Blockcopolymers mit Holz. Dabei kann der Anteil des PE/PP Blockcopolymers sowie der Anteil des Holz zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz mit einer Partikelgrößenverteilung D10 von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Blockcopolymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

Beispielsweise kann das Trägermaterial als Granulat vorliegen und dabei etwa eine zylindrische Form aufweisen. Ferner können unabhängig von der Form aber beispielhaft bei der zylindrischen Form die Granulatpartikel einen Durchmesser in einem Bereich von 2-3mm, beispielsweise 2 oder 3mm, und eine Länge von 2-9mm, beispielsweise 2-7mm oder 5-9mm aufweisen.

Gemäß einer weiteren bevorzugten Ausgestaltung der Erfindung besteht das Trägermaterial aus einer Mischung eines PE/PP Polymerblends mit Holz. Dabei kann der Anteil des PE/PP Polymerblends sowie der Anteil des Holz zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz mit einer Partikelgrößenverteilung D10 von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Polymerblend mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

In einer weiteren Ausgestaltung der Erfindung besteht das Trägermaterial aus einer Mischung eines PP-Homopolymers mit Holz. Dabei kann der Anteil des PP-Homopolymers sowie der Holzanteil zwischen ≥45 Gew.-% und ≤55 Gew.-% liegen. Beispielsweise könne die Bestandteile Holz und Polypropylen in einem Verhältnis von 0,5:1 bis 1:0,5, etwa 1:1 vorliegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz eine Partikelgrößenverteilung D10 von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PP-Homopolymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.In einer weiteren Ausgestaltung der Erfindung besteht das Trägermaterial aus einer Mischung eines PVC-polymers mit Kreide. Dabei kann der Anteil des PVC-Polymers sowie der Kreideanteil zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße der Kreide liegt dabei zwischen >0µm und ≤1000µm, beispielsweise zwischen ≥800µm und ≤1000µm mit einer bevorzugten Partikelgrößenverteilung D50 von ≥400µm, beispielsweise von ≥600µm. Insbesondere kann das Trägermaterial dabei Kreide mit einer Partikelgrößenverteilung D10 von ≥400µm, beispielsweise von ≥600µm, aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PVC-Polymer mit Kreide der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm, beispielsweise ≥ 1000µm bis ≤ 10mm.

In einer weiteren Ausgestaltung der Erfindung besteht das Trägermaterial aus einer Mischung eines PVC-Polymers mit Holz. Dabei kann der Anteil des PVC-Polymers sowie der Holzanteil zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤1000µm, beispielsweise zwischen ≥800µm und ≤1000µm mit einer bevorzugten Partikelgrößenverteilung D50 von ≥400µm, beispielsweise von ≥600µm. Insbesondere kann das Trägermaterial dabei Holz eine Partikelgrößenverteilung D10 von ≥400µm, beispielsweise von ≥600µm, aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PVC-Polymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm, beispielsweise ≥ 1000µm bis ≤ 10mm.

Zur Bestimmung der Partikelgrößenverteilung kann auf die allgemein bekannten Verfahren wie beispielsweise die Laserdiffraktometrie zurückgegriffen werden, mit welcher Partikelgrößen im Bereich von einigen Nanometern bis hin zu mehreren Millimetern bestimmt werden können. Mittels dieser Methode lassen sich auch D50 bzw. D10 Werte ermitteln, welche 50% bzw. 10% der gemessenen Partikel kleiner sind als der angegebene Wert.

Gemäß einer weiteren Ausgestaltung kann der Träger nach Verfahrensschritt e), insbesondere unmittelbar nach Verfahrens schritt e) und/oder beispielsweise vor dem Aufbringen weiterer Schichten auf den Träger auf eine Temperatur erhitzt werden, die oberhalb der Kristallisierungstemperatur eines in dem Träger vorliegenden Kunststoffes liegt. Anschließend kann der Träger wiederum unter die Kristallisierungstemperatur, beispielsweise auf Raumtemperatur (22°C), abgekühlt werden. Insbesondere, wenn der Träger nach dem Behandeln des Trägers unter Einwirkung von Druck unter Verwendung einer Zweibandpresse erneut erhitzt wird auf eine Temperatur, die oberhalb der Kristallisierungstemperatur des Kunststoffs des Trägermaterials und gegebenenfalls oberhalb der Kristallisierungstemperatur des Matrixmaterials liegt, können die Eigenschaften des Trägers noch weiter verbessert werden. Beispielsweise kann der Träger verbesserte Stabilitätseigenschaften aufweisen, insbesondere hinsichtlich seiner mechanischen und/oder thermischen und/oder chemischen Beständigkeit. Dadurch kann die Qualität des Trägers weiter verbessert werden.

Insbesondere ist diese Ausgestaltung anwendbar bei dem Vorhandensein von teilkristallinen und/oder thermoplastischen Polymeren in dem Trägermaterial beziehungsweise als Matrixmaterial, wie etwa von Polyethylen oder Polypropylen. Die Kristallisierungstemperatur ist dabei im Sinne der vorliegenden Erfindung insbesondere die Temperatur, auf welche das Polymer erhitzt werden muss, um dabei beim Abkühlen Kristalle ausbilden zu können. Insbesondere beginnt die Kristallbildung bei einem Abkühlen des Polymers bei einer Temperatur, die unterhalb der Schmelztemperatur und gegebenenfalls oberhalb der Glasübergangstemperatur liegen kann. Entsprechend kann ein Erhitzen auf eine Temperatur unterhalb der Schmelztemperatur des jeweiligen Kunststoffes ausreichen. Für den Fall von linearem Polyethylen (LLDPE) kann beispielsweise ein Erhitzen auf eine Temperatur in einem Bereich von ≥ 100°C bis ≤ 150°C, beispielsweise von 120°C, ausreichend sein. Für den Fall von Polypropylen kann beispielsweise ein Erhitzen auf eine Temperatur in einem Bereich von ≥ 160°C bis ≤ 200°C, beispielsweise von 180°C, ausreichend sein.

Die Dauer des entsprechenden Erhitzens kann somit in für den Fachmann verständlicher Weise abhängen von der Verfahrgeschwindigkeit des Trägers, von seiner Dicke und von der einzustellenden Temperatur.

Gemäß einer weiteren Ausgestaltung kann in den Träger ein Faserwerkstoff eingearbeitet werden. Insbesondere kann der Faserwerkstoff in den Träger bei Verfahrensschritt b) eingearbeitet werden. In dieser Ausgestaltung kann somit etwa ein Faserwerkstoff, insbesondere als Faserwerkstoffbahn, auf einer Rolle aufgewickelt sein und mittels einer Abwickelstation zum Abwickeln des Faserwerkstoffs abgewickelt und zwischen die zwei bandartigen Fördermittel geführt werden, um den Faserwerkstoff einzufügen. Beispielsweise kann in dieser Ausgestaltung ein Glasfaservlies verwendet werden. In dieser Ausgestaltung kann ein Träger mit einer besonders hohen Belastbarkeit beziehungsweise Stabilität erzeugt werden, da die Festigkeit des Trägers durch den eingearbeiteten Faserwerkstoff signifikant erhöht werden kann. Darüber hinaus kann der Träger in dieser Ausgestaltung besonders maßgeschneidert werden, da beispielsweise durch das Vorsehen einer Mehrzahl von Streueinheiten, wie dies vorstehend im Detail erläutert ist, das Trägermaterial beispielsweise oberhalb und unterhalb des Vlies wie gewünscht einstellbar sein kann. Ferner kann eine noch maßschneiderbare Lösung durch das Vorsehen einer Mehrzahl von Faserwerkstoff-bahnen ermöglicht werden, wobei das Trägermaterial wiederum wie gewünscht variierbar beziehungsweise anpassbar sein kann.

Gemäß einer weiteren Ausgestaltung kann in Verfahrensschritt c) oder in Verfahrensschritt e) ein Temperaturgradient eingestellt werden. Insbesondere kann ein Temperaturgradient entlang einer Förderrichtung des Trägermaterials eingestellt werden. In dieser Ausgestaltung kann dieser Verfahrensschritt ein besonders qualitativ hochwertiges Produkt ermöglichen und ferner eine besonders hohe Liniengeschwindigkeit erlauben. Im Detail kann etwa unter Verwendung eines Temperaturgradienten entlang einer Förderrichtung ein besonders schnelles Aufheizen ermöglicht werden, was eine hohe Liniengeschwindigkeit erlaubt. Dies kann beispielsweise realisierbar sein durch eine vergleichsweise höhere Temperatur in einem in Förderrichtung ersten oder vorderen Bereich. Dabei kann weiterhin eine zu hohe Temperatureinwirkung auf das Trägermaterial verhindert werden, was Beschädigungen verhindern und eine besonders hohe Qualität ermöglichen kann. Darüber hinaus kann etwa ein Entgasen bei einer Erhitzung des Trägermaterials verbessert und beschleunigt werden, was wiederum eine hohe Liniengeschwindigkeit erlaubt und ferner durch das Verhindern von Gaseinschlüssen eine besonders hohe Stabilität und Qualität ermöglichen kann. Dies kann insbesondere durch einen Temperaturgradienten in einer zu der Förderrichtung senkrechten Richtung ermöglicht werden. Im letzteren Fall kann insbesondere der Bereich unterhalb des Trägermaterials höher erhitzt werden, als der Bereich oberhalb des Trägermaterials. Beispielsweise kann hier ein Temperaturgradient in einem Bereich von 50°C vorteilhaft sein.

Gemäß einer weiteren Ausgestaltung kann Verfahrensschritt d) durchgeführt wird unter Verwendung einer S-Walze. Durch das Verwenden einer S-Walze als Komprimierungseinheit kann ein gewünschtes Komprimieren mit einem einfachen und kostengünstigen Mittel definiert auch bei hohen Liniengeschwindigkeiten ermöglicht werden. Um die entsprechende und in Abhängigkeit des gewünschten Ergebnisses geeignete Kraft einstellen zu können, kann die Walze beispielsweise in Richtung auf das durchlaufende Trägermaterial verstellbar sein. Dabei kann die S-Walze beispielsweise nur eine Walze umfassen, welche eine Kraft ausübt nur in Kombination mit einer Gegenkraft durch die Bandspannung der Fördermittel. Alternativ kann eine oder eine Mehrzahl an Gegenwalzen vorgesehen sein, welche die entsprechende Gegenkraft aufbringen. Unter einer S-Walze kann dabei im Sinne der Erfindung eine Walze verstanden werden, welche derart angeordnet ist, dass der Träger sie s-förmig umläuft, wie es für den Fachmann bekannt ist und nachstehend mit Bezug auf die Figuren im Detail beschrieben ist.

Hinsichtlich weiterer technischer Merkmale und Vorteile des Verfahrens wird hiermit explizit auf die Beschreibung des Wand- oder Bodenpaneels sowie auf die Figuren Bezug genommen. Darüber hinaus betrifft die Erfindung ein Wand- oder Bodenpaneel, hergestellt gemäß einem vorstehend beschriebenen Verfahren, wobei das Paneel einen plattenförmigen Träger aufweist, der aus einem Mehrschichtaufbau aus einem Trägermaterial und einem Feuchtigkeitsschutz derart ausgestaltet ist, dass eine Schicht des Feuchtigkeitsschutzes wenigstens eine von der unteren oder der oberen Oberfläche des Mehrschichtaufbaus ausbildet, wobei das Paneel auf zumindest einem Teilbereich der Oberseite des Trägers ein eine Dekorvorlage nachbildendes Dekor aufweist und wobei eine Schutzschicht auf zumindest einen Teilbereich des Dekors vorgesehen ist.

Eine vorbeschriebene Ausgestaltung eines dekorierten Paneels ermöglicht auf besonders einfache und kostengünstige Weise das Bereitstellen eines Paneels mit einer verbesserten Feuchtigkeitsbeständigkeit. Der Träger ist aus einem Mehrschichtaufbau aufgebaut. Beispielsweise kann der Träger aus dem Mehrschichtaufbau bestehen. Der Mehrschichtaufbau umfasst in wenigstens einer Schicht das Trägermaterial, welches das Grundmaterial des Trägers sein kann und diesem etwa seine Stabilität geben kann. Ferner umfasst der Mehrschichtaufbau den Feuchtigkeitsschutz, welcher das Trägermaterial vor dem Einfluss von Feuchtigkeit schützen kann. Dabei kann der Feuchtigkeitsschutz an der Unterseite des Trägers und/oder an seiner Oberseite vorliegen. Dadurch kann ein effektiver Schutz sowohl von der Oberseite, wie auch von der Unterseite erfolgen.

Ferner kann der plattenförmige Träger zumindest in einem Randbereich eine Profilierung aufweisen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Hinsichtlich weiterer technischer Merkmale und Vorteile des Wand- oder Bodenpaneels wird hiermit explizit auf die Beschreibung des Verfahrens, auf die Figuren Bezug genommen.

Die Erfindung ist nachfolgend anhand der Figuren sowie eines Ausführungsbeispiels weiter erläutert.
Fig. 1 zeigt schematisch eine erfindungsgemäße Vorrichtung zum Durchführen eines Teils des erfindungsgemäßen Verfahrens;
Fig.2 zeigt eine beispielhafte S-Walze zum Durchführen eines Verfahrensschritts des erfindungsgemäßen Verfahrens; und
Fig. 3 zeigt einen Träger als Bestandteil eines erfindungsgemäß herstellbaren Paneels.

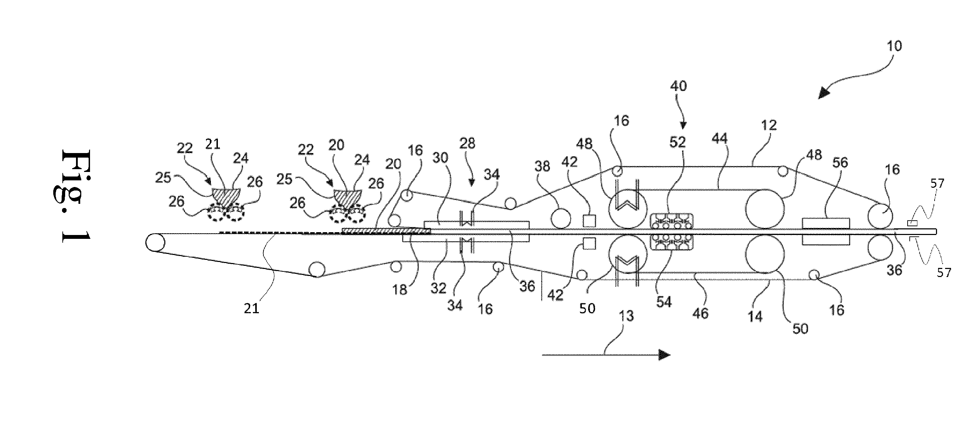

Die Vorrichtung nach Figur 1 ist geeignet für ein Verfahren zur Herstellung eines dekorierten Wand- oder Bodenpaneels. Dabei werden bezüglich Figur 1 insbesondere Bearbeitungsstationen für die folgenden Verfahrensschritte beschrieben:
a1) Bereitstellen eines schüttfähigen Trägermaterials 20, insbesondere eines Granulats,
a2) Bereitstellen eines schüttfähigen Feuchtigkeitschutzes 21, insbesondere eines Granulats,
b) Anordnen des Trägermaterials 20 und des Feuchtigkeitsschutzes 21 zwischen zwei bandartigen Fördermitteln 12, 14 unter Ausbildung eines Mehrschichtaufbaus 37 derart, dass eine Schicht 70, 72 des Feuchtigkeitsschutzes 21 wenigstens eine von der unteren oder der oberen Oberfläche des Mehrschichtaufbaus 37 ausbildet,
c) Formen des Mehrschichtaufbaus 37 unter Einwirkung von Temperatur unter Ausbildung eines bahnförmigen Trägers 36,
d) Komprimieren des Trägers 36,
e) Behandeln des Trägers 36 unter Einwirkung von Druck unter Verwendung einer Zweibandpresse,
f) gegebenenfalls Abkühlen des Trägers 36.

An diese Verfahrensschritte anschließend kann das Verfahren weitere Verfahrensschritte aufweisen, um das fertige Wand- oder Bodenpaneel zu erhalten.

Die Vorrichtung 10 gemäß Figur 1 umfasst zunächst zwei umlaufende bandartige Fördermittel 12, 14, welche insbesondere durch Umlenkrollen 16 derart geführt sind, dass sich zwischen ihnen ein Aufnahmeraum 18 zum Aufnehmen und bearbeiten eines bereitgestellten schüttfähigen, insbesondere granularen Trägermaterials 20, etwa auf Basis eines Kunststoffs, etwa aufweisend PVC, oder eines Holz-Kunststoff-Komposit-Werkstoffes, etwa aufweisend Holz und PP, PE oder ein Blockcopolymer aufweisend PP und PE, ausbildet. Die Fördermittel 12, 14 können zumindest teilweise aus Polytetrafluorethylen ausgestaltet sein, beispielsweise damit beschichtet sein. Weiterhin können die Fördermittel 12, 14 zumindest teilweise, insbesondere auf ihrer dem Aufnahmeraum 18 zugewandten Seite, geraut beziehungsweise strukturiert sein. Ferner können die Fördermittel 12, 14 etwa eine Breite in einem Bereich von etwa 1,5m aufweisen.

Um das Trägermaterial 20 zwischen den bandartigen Fördermitteln 12, 14 beziehungsweise in dem Aufnahmeraum 18 anzuordnen, ist eine Austrageinheit 22 mit einem oder einer Mehrzahl an Austragköpfen 24 vorgesehen, durch welche das Trägermaterial 20 auf dem unteren Fördermittel 14 anordbar ist. Die Austragköpfe 24 können dabei einen Trichter 25 umfassen, der das Trägermaterial 20 auf entsprechende Streuwalzen 26 aufbringt, woraufhin das Trägermaterial 20 auf das untere Fördermittel 14 gestreut werden kann.

Eine entsprechende Austrageinheit 22, wie diese vorstehend beschrieben ist, ist ebenfalls für einen Feuchtigkeitsschutz 21 vorgesehen. Der Feuchtigkeitsschutz 21 kann ebenfalls granular vorliegen und etwa einen Bestandteil der Reispflanze als Füllstoff und ein Matrixmaterial, wie etwa einen Kunststoff, aufweisen.

Um ein homogenes Auftragen des Trägermaterials 20 beziehungsweise des Feuchtigkeitsschutzes 21 auf dem unteren Fördermittel 14 sicherzustellen, kann ein Sensor zum Überprüfen des Anordnens des Trägermaterials 20 beziehungsweise des Feuchtigkeitsschutzes 21 zwischen zwei bandartigen Fördermitteln 12, 14 vorgesehen sein. Der Sensor kann insbesondere mit der Austrageinheit 22 gekoppelt sein, um eine potentiell ungenaue Befüllung des Aufnahmeraums 18 unmittelbar zu korrigieren.

Um ein besonders homogenes Verteilen des Trägermaterials 20 beziehungsweise des Feuchtigkeitsschutzes 21 zu ermöglichen, können ferner Vibratoren vorgesehen sein. Diese können etwa auf das untere Fördermittel 14 einwirken und dabei beispielsweise unter dem unteren Fördermittel 14 angeordnet sein, so dass das Trägermaterial 20 beziehungsweise des Feuchtigkeitsschutzes 21 fein verteilt wird.

Um eine ungewünschte Verunreinigung und eine Beschädigung nachfolgender Bearbeitungsstationen zu verhindern, kann ferner ein Sensor zum Detektieren von Metallen vorgesehen sein, welcher ungewollt eingefügtes Metall detektieren kann.

Weiterhin kann eine Vorrichtung zum Einbringen eines Faserwerkstoffs in den Aufnahmeraum 18 und damit in den Träger vorgesehen sein. Beispielsweise kann der Faserwerkstoff bandartig ausgestaltet sein und von einer Rolle abgewickelt werden. Dabei kann der Faserwerkstoff etwa zwischen zwei Austragköpfen 24 angeordnet sein, um beispielsweise oberhalb und unterhalb des Faserwerkstoffs ein unterschiedliches Material anordnen zu können. Somit kann der Faserwerkstoff beispielsweise derart eingeführt werden, dass oberhalb und unterhalb des Faserwerkstoffs eine gewünschte Menge an Trägermaterial 20 sich befindet.

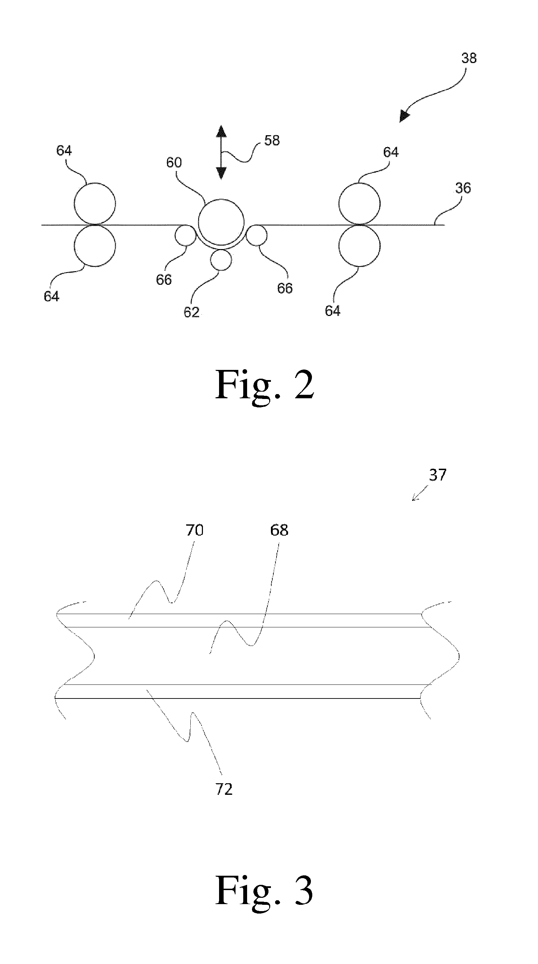

Durch die beiden Austrageinheiten 22 kann eine Mehrschichtstruktur 37 derart auf das untere Fördermittel 14 aufgebracht werden, dass etwa eine untere Schicht 72 der Mehrschichtstruktur 37 den Feuchtigkeitsschutz 21 aufweist und dass eine obere Schicht 68 das Trägermaterial 20 aufweist. Alternativ kann die Mehrschichtstruktur 37 beziehungsweise der Träger 36, wie dies in der Figur 3 gezeigt, ist eine Dreischichtstruktur aufweisen, wobei zwei Schichten 70, 72 mit Feuchtigkeitsschutz 21 eine Schicht 68 mit Trägermaterial 20 einschließen.

Zurückkommend auf Figur 1 ist in der Förderrichtung der Fördermittel 12, 14, welche durch den Pfeil 13 gekennzeichnet ist, ferner eine Formeinheit 28 vorgesehen, welche dazu ausgestaltet ist, das Trägermaterial 20 unter Einwirkung von Temperatur beziehungsweise Hitze zum Verschmelzen des Trägermaterials 20 beziehungsweise gegebenenfalls eines Matrixmaterials des Feuchtigkeitsschutzes 21 unter Ausbildung eines bahnförmigen beziehungsweise bahnartigen Trägers 36 zu formen. Hierzu kann die Formeinheit 28 etwa zwei plattenartige Formeinrichtungen 30, 32 aufweisen, welche durch eine Heizeinrichtung 34, etwa mittels eines Thermoöls, heizbar sind. Dadurch kann das Trägermaterial 20 beziehungsweise das Matrixmaterial erhitzt werden, bis es, abhängig etwa von dem Schmelzpunkt des Trägermaterials 20 oder eines Teils desselben, in Abhängigkeit des verwendeten Materials, wie etwa PVC oder einem WPC-Werkstoff, beziehungsweise eines Materials des Feuchtigkeitsschutzes 21, eine Temperatur von beispielhaft ≥ 180°C bis ≤ 200°C erreicht hat. Hierzu kann die Formeinheit 28 beziehungsweise können die Formeinrichtungen 30, 32 beispielsweise auf eine Temperatur von bis zu 250°C erhitzt werden. Dabei kann beispielsweise eine oder zur Einstellung eines Temperaturgradienten eine Mehrzahl an unabhängig einstellbaren Heizbereichen vorgesehen sein. Beispielsweise können die gesamten Formeinrichtungen 30, 32, welche etwa eine Länge von mehreren Metern aufweisen können, beheizbar sein, oder nur ein Teil derselben kann heizbar sein.

Weiterhin kann die Formeinheit 28 insbesondere einen parallelen Spalt aufweisen, der durch die plattenartige Formeinrichtungen 30, 32 gebildet sein kann. Dabei kann jedoch am Einlauf durch eine konische Form ein Einlaufmaul vorgesehen sein, um einen verbesserten Einlauf des Trägermaterials 20 zu ermöglichen. Die auf das Trägermaterial 20 beziehungsweise den Feuchtigkeitsschutz 21 wirkende Kraft kann dabei in einem Bereich von > 0 kg/m² bis zu ≤ 1kg/m² liegen. Dabei kann insbesondere eine gleichmäßige Druckbeaufschlagung ohne das Vorsehen eines Druckprofils beziehungsweise eines Druckgradienten vorgesehen sein.

In der Figur 1 ist ferner zu erkennen, dass die untere Formeinrichtung 32 länger ist, als die obere Formeinrichtung 30 und ferner vor der oberen beginnt. Dadurch kann erreicht werden, dass eine Bearbeitung erst erfolgt, wenn das Trägermaterial 20 beziehungsweise ein Matrixmaterial beziehungsweise des Feuchtigkeitsschutzes 21 bereits geschmolzen oder zumindest angeschmolzen und zumindest teilweise erweicht ist. Dadurch kann ein besonders definierter Formgebungsprozess ermöglicht werden.

Im weiteren Verlauf in Förderrichtung der Fördereinheiten 12, 14 wird der bahnartige Träger 36 durch eine Presseinrichtung 38 geführt. Die Presseinrichtung 38 kann beispielsweise eine S-Walze umfassen, welche im Detail in der Figur 2 gezeigt ist. Die S-Walze kann dabei im Wesentlichen senkrecht zu der Oberfläche des Trägers 36 und damit zu der Verfahrrichtung des Trägers 36 verfahrbar sein, wie dies der Pfeil 58 andeutet, so dass die gewünschten Drücke besonders vorteilhaft einstellbar sein können. Ferner kann die Presseinrichtung 38 beispielsweise auf den Träger 36 einen Druck ausüben, der in einem Bereich von ≥ 1kg/m² bis ≤ 3kg/m² liegen kann. Die S-Walze umfasst dabei eine Hauptwalze 60, welche auf den bahnförmigen Träger 36 einwirkt. Unter Umständen kann dabei die Bandspannung als Gegendruck ausreichen, wobei es jedoch bevorzugt ist, dass wenigstens eine Gegendruckwalze 62 vorgesehen ist. Für ein geeignetes Führen des bahnartigen Trägers 36 können ferner zwei Paare von Kalanderwalzen 64 und gegebenenfalls Umlenkwalzen 66 vorgesehen sein, welche ferner für eine geeignete Bandspannung sorgen können. In der Figur 2 ist dabei zu erkennen, dass der bahnartige Träger 36 um die Umlenkwalzen 66 und die Hauptwalze 60 zweifach S-förmig geführt wird, welche Führung den Begriff S-Walze bedingt. Im Detail kann die Hauptwalze 60 durch den bahnförmigen Träger 36 in einem Bereich von ungefähr 50% oder mehr umschlungen sein. Die Temperatur des Trägers 36 entspricht bei einem Einlauf in die Presseinrichtung 38 ferner insbesondere der beim Ausgang aus der Formeinheit 28 vorliegenden Temperatur.

Von der Presseinrichtung 38 wird der Träger 36 im Weiteren zu einer weiteren Presseinrichtung 40 geführt. Um einen etwaigen Wärmeverlust des Trägers 36 ausgleichen oder den Träger 36 bewusst weiter zu erhitzen oder auch, um den Träger 36 aktiv zu kühlen, kann zwischen den Presseinrichtungen 38, 40 eine weitere Temperiereinrichtung 42, wie etwa eine Heizeinrichtung, etwa ein IR-Heizer, oder bevorzugt eine Kühleinrichtung, um den Träger 36 zu kühlen, vorgesehen sein. Dabei kann der Träger 36 auch durch eine Heizeinrichung gekühlt werden, insoweit diese eine Temperatur auf den Träger überträgt, welche unterhalb der vor dem Einlauf in die Temperiereinrichtung 42 vorliegende Trägertemperatur liegt, aber oberhalb der Raumtemperatur.

Zurückkommend zu der Presseinrichtung 40 kann dieses vorteilhafter Weise eine Zweibandpresse sein, welche insbesondere Stahlbänder 44, 46 aufweisen kann, welche etwa auf der dem Träger 36 zugewandten Seite mit Polytetrafluorethylen (Teflon) beschichtet sein können und wobei die Bänder 44, 46 der Zweibandpresse durch Umlenkrollen 48, 50 geführt sein können. Die Umlenkrollen 48, 50 können beispielsweise beheizt oder vorteilhaft gekühlt sein, etwa mittels einer Thermoöltemperierung und/oder die Rollen auf der gleichen Seite des Spalts können etwa einen Abstand in einem Bereich von ≥1m bis ≤ 2m, beispielsweise 1,5m von einander angeordnet sein, wobei die Bänder 44, 46 eine Breite in einem Bereich von etwa 1,5m aufweisen können. Gemäß Figur 1 wird der sich zwischen den Fördermitteln 12, 14 befindliche Träger 20 zwischen die Umlenkrollen 48, 50 und somit zwischen die Bänder 44, 46, wie insbesondere Stahlbänder geführt. Auf der dem Träger 36 gegenüberliegenden Seite der Bänder 44, 46 sind jeweils Press- und/oder Temperiereinrichtungen 52, 54 vorgesehen, mit welchen der Träger 36 gekühlt werden kann. Diese können die Fördereinrichtungen 12, 14 und damit den Träger 36 sowohl abkühlen, als auch geringfügig komprimieren. Hierzu kann etwa eine Luft-Kühlung vorgesehen sein und eine Mehrzahl an Rollen, welche ein intermittierendes Pressen ermöglichen können. Dabei kann eine Temperatur der Bänder 44, 46 eingestellt werden, die in einem Bereich von ≥150°C bis ≤ 180°C, beispielsweise bei 170°C für das obere Band 44 und/oder in einem Bereich von ≥140°C bis ≤ 170°C, beispielsweise bei 160°C für das untere Band 46 eingestellt werden. Dazu können beispielsweise durch die Temperiereinrichtung 52, 54 oder durch eine Mehrzahl an Temperiereinrichtungen Kühlzonen in Bewegungsrichtung des Trägers 36 vorgesehen sein, um einen Temperaturgradienten einzustellen. Beispielsweise kann so ein sukzessives Abkühlen ermöglicht werden. Beispielsweise kann eine erste Kühlzone auf die Bänder 44, 46 wirken, welche in einem Bereich von ≥ 55°C bis ≤ 85°C, beispielsweise bei 72°C, liegt, und/oder kann eine zweite Kühlzone auf die Bänder 44, 46 wirken, welche in einem Bereich von ≥45°C bis ≤ 75°C, beispielsweise bei 62°C, liegt, und/oder kann eine dritte Kühlzone auf die Bänder 44, 46 wirken, welche in einem Bereich von ≥15°C bis ≤ 45°C, beispielsweise bei 30°C, liegt. Vorzugsweise kann die Temperatur des Trägers in der Presseinrichtung 40 unterhalb der Schmelztemperatur beziehungsweise Erweichungstemperatur des Trägermaterials oder eines Teils desselben liegen. Weiterhin kann ein derartiger Druck auf den Träger 36 einwirken, dass der Träger 36 bei Verfahrensschritt e) um einen Faktor von ≤ 7,5%, vorzugsweise ≤ 5%, beispielsweis in einem Bereich von ≥0,1mm bis ≤ 0,2mm komprimiert wird. Die Temperiereinrichtungen 52, 54 können dabei im Wesentlichen den gesamten Bereich zwischen den Umlenkrollen 48, 50 einnehmen, oder auch nur einen entlang der Förderrichtung begrenzten Bereich.

Die Presseinrichtung 40 kann dabei ein veränderliches Druckprofil aufweisen, etwa in einem Bereich beginnend mit 6mm und endend mit 4,1mm, beispielsweise beginnend mit 5,9mm und endend mit 5,3mm, etwa mit Zwischenstufen von 5,7mm und 5,5mm oder vorteilhaft als isochore Presse ausgestaltet sein.

In der Förderrichtung hinter der Presseinrichtung 40 ist gemäß Figur 1 eine Kühleinrichtung 56 angeordnet, durch welche der Träger auf eine Temperatur abgekühlt werden kann, welche beispielsweise in einem Bereich von ≤ 35°C liegt. Dabei kann die Kühleinrichtung 56 beispielsweise auf einer Wasserkühlung basieren und etwa mehrere Kühlzonen umfassen, um eine definierte Kühlung unter Verwendung genau anpassbarer Kühlprogramme zu ermöglichen. Die Länge der Kühlzone kann dabei der wirksamen Länge der Presseinrichtung 40 entsprechen. Im Anschluss an die Kühleinrichtung 56 kann etwa noch ein weiteres Kühlband vorgesehen sein.

Nach diesen Verfahrensschritten kann der Träger, der etwa eine Enddicke in einem Bereich von ≥ 3mm bis ≤ 5mm, beispielsweise 4,1mm, aufweisen kann, unmittelbar weiterbehandelt werden, oder gelagert werden, etwa als bahnförmiger Träger 36 oder als bereits vereinzelter plattenförmiger Träger.

Weiterhin ist wenigstens eine Heizeinrichtung 57, in der Ausgestaltung gemäß Figur 1 zwei Heizeinrichtungen 57 vorgesehen, durch welche der Träger 36 heizbar ist, und welche bevorzugt in Verfahrrichtung des Trägers bevorzugt hinter der Presseinrichtung 40, insbesondere hinter der Zweibandpresse, angeordnet ist. Hierdurch wird es möglich, dass der Träger 36 nach Verfahrensschritt e) auf eine Temperatur erhitzt wird, die oberhalb der Kristallisierungstemperatur eines in dem Träger 36 vorliegenden Kunststoffs liegt, wobei sich ein Abkühlen anschließen kann, was etwa unter Zuhilfenahme einer Temperiereinheit beziehungsweise einer Kühleinheit realisierbar ist.

An dieser Stelle schließen sich bei dem erfindungsgemäßen Verfahren die weiteren Verfahrensschritte an:
g) gegebenenfalls Aufbringen eines Dekoruntergrunds auf zumindest einen Teilbereich des Trägers 36;
h) Aufbringen eines eine Dekorvorlage nachbildenden Dekors auf zumindest einen Teilbereich des Trägers 36,
i) Aufbringen einer Schutzschicht auf zumindest einen Teilbereich des Dekors,
j) gegebenenfalls Strukturieren der Schutzschicht, und
k) gegebenenfalls Behandeln des Trägers 36 zur elektrostatischen Entladung vor einem der vorgenannten Verfahrensschritte.

### Bezugszeichen:

- 10: Vorrichtung
- 12: bandartiges Fördermittel
- 13: Pfeil
- 14: bandartiges Fördermittel
- 16: Umlenkrolle
- 18: Aufnahmeraum
- 20: Trägermaterial
- 21: Feuchtigkeitsschutz
- 22: Austrageinheit
- 24: Austragkopf
- 25: Trichter
- 26: Streuwalze
- 28: Formeinheit
- 30: Formeinrichtung
- 32: Formeinrichtung
- 34: Heizeinrichtung
- 36: bahnartiger Träger
- 38: Presseinrichtung
- 40: Presseinrichtung
- 42: Temperiereinrichtung
- 44: Stahlbänder
- 46: Stahlbänder
- 48: Umlenkrolle
- 50: Umlenkrolle
- 52: Temperiereinrichtung
- 54: Temperiereinrichtung
- 56: Kühleinrichtung
- 57: Heizeinrichtung
- 58: Pfeil
- 60: Hauptwalze
- 62: Gegendruckwalze
- 64: Kalanderwalze
- 66: Umlenkwalze
- 68: Schicht
- 70: Schicht
- 72: Schicht

## Patentansprüche

1. Verfahren zur Herstellung eines dekorierten Wand- oder Bodenpaneels, aufweisend die Verfahrensschritte:
a1) Bereitstellen eines schüttfähigen Trägermaterials (20), insbesondere eines Granulats,
a2) Bereitstellen eines schüttfähigen Feuchtigkeitschutzes (21), insbesondere eines Granulats,
b) Anordnen des Trägermaterials (20) und des Feuchtigkeitsschutzes (21) zwischen zwei bandartigen Fördermitteln (12, 14) unter Ausbildung eines Mehrschichtaufbaus (37) derart, dass eine Schicht (70, 72) des Feuchtigkeitsschutzes (21) wenigstens eine von der unteren oder der oberen Oberfläche des Mehrschichtaufbaus (37) ausbildet,
c) Formen des Mehrschichtaufbaus (20) unter Einwirkung von Temperatur unter Ausbildung eines bahnförmigen Trägers (36),
d) Komprimieren des Trägers (36),
e) Behandeln des Trägers (36) unter Einwirkung von Druck unter Verwendung einer Zweibandpresse,
f) gegebenenfalls Abkühlen des Trägers (36),
g) gegebenenfalls Aufbringen eines Dekoruntergrunds auf zumindest einen Teilbereich des Trägers (36);
h) Aufbringen eines eine Dekorvorlage nachbildenden Dekors auf zumindest einen Teilbereich des Trägers (36),
i) Aufbringen einer Schutzschicht auf zumindest einen Teilbereich des Dekors.

2. Verfahren nach Anspruch 1, **dadurch gekennzeichnet, dass** der Feuchtigkeitsschutz (21) ein Material aus einem Bestandteil der Reispflanze, Zellulose oder ein mineralisches Material aufweist.

3. Verfahren nach Anspruch 1 oder 2, **dadurch gekennzeichnet, dass** als Mehrschichtaufbau (37) eine Zweischichtstruktur oder eine Dreischichtstruktur erzeugt wird.

4. Verfahren nach einem der Ansprüche 1 bis 3, **dadurch gekennzeichnet, dass** der Feuchtigkeitsschutz (21) einen Kunststoff als Matrixmaterial und ferner einen Füllstoff aufweist.

5. Verfahren nach einem der Ansprüche 1 bis 4, **dadurch gekennzeichnet, dass** ein Trägermaterial (20) auf Basis eines Kunststoffs oder eines Holz-Kunststoff-Komposit-Werkstoffs bereitgestellt wird, insbesondere wobei ein Trägermaterial (20) auf Basis eines WPC-Werkstoffs, insbesondere aufweisend Holz und Polyethylen, Holz und Polypropylen oder Holz und ein Copolymer aus Polyethylen und Polypropylen, oder auf Basis eines PVC-Werkstoffs bereitgestellt wird.

6. Verfahren nach Anspruch 4 oder 5, **dadurch gekennzeichnet, dass** der Feuchtigkeitsschutz (21) und das Trägermaterial (20) den gleichen Kunststoff aufweisen.

7. Verfahren nach einem der Ansprüche 4 bis 6, **dadurch gekennzeichnet, dass** der Träger (36) bei oder vor Verfahrensschritt e) unter den Schmelzpunkt oder den Erweichungspunkt eines Kunststoffbestandteils des Trägers (36) gekühlt wird.

8. Verfahren nach einem der Ansprüche 4 bis 7, **dadurch gekennzeichnet, dass** der Träger (36) nach Verfahrensschritt e) auf eine Temperatur erhitzt wird, die oberhalb der Kristallisierungstemperatur eines in dem Träger (36) vorliegenden Kunststoffes liegt.

9. Verfahren nach einem der Ansprüche 1 bis 8, **dadurch gekennzeichnet, dass** die bei Verfahrensschritt e) verwendeten bandartigen Fördermitteln (12, 14) jeweils ein mit Polytetrafluorethylen beschichtetes Stahlband aufweisen.

10. Verfahren nach einem der vorhergehenden Ansprüche, **dadurch gekennzeichnet, dass** die bandartigen Fördermittel (12, 14) zumindest teilweise strukturiert sind.

11. Verfahren nach einem der vorhergehenden Ansprüche, **dadurch gekennzeichnet, dass** ein Sensor zum Überprüfen des Anordnens des Trägermaterials (20) und des Feuchtigkeitsschutzes (21) zwischen den bandartigen Fördermitteln (12, 14) vorgesehen ist.

12. Verfahren nach einem der vorhergehenden Ansprüche, **dadurch gekennzeichnet, dass** in den Träger (36) ein Faserwerkstoff, insbesondere eine Faserwerkstoffbahn, eingearbeitet wird.

13. Verfahren nach einem der vorhergehenden Ansprüche, **dadurch gekennzeichnet, dass** in Verfahrensschritt c) oder in Verfahrensschritt e) ein Temperaturgradient eingestellt wird.

14. Verfahren nach einem der vorhergehenden Ansprüche, **dadurch gekennzeichnet, dass** Verfahrensschritt d) durchgeführt wird unter Verwendung einer S-Walze.

15. Wand- oder Bodenpaneel, hergestellt nach einem Verfahren gemäß einem der vorhergehenden Ansprüche, wobei das Paneel einen plattenförmigen Träger (36) aufweist, der aus einem Mehrschichtaufbau (37) aus einem Trägermaterial (20) und einem Feuchtigkeitsschutz (21) derart ausgestaltet ist, dass eine Schicht (70, 72) des Feuchtigkeitsschutzes (21) wenigstens eine von der unteren oder der oberen Oberfläche des Mehrschichtaufbaus (37) ausbildet, wobei das Paneel auf zumindest einem Teilbereich der Oberseite des Trägers (36) ein eine Dekorvorlage nachbildendes Dekor aufweist und wobei eine Schutzschicht auf zumindest einen Teilbereich des Dekors vorgesehen ist.
